# DEMANDE DE BREVET EUROPEEN

(11) **EP 4 792 649 A1**
(43) Date de publication de la demande: **19.08.2026**
(21) Numéro de dépôt: 26158309.0
(22) Date de dépôt: 12.02.2026
(51) Int. Cl.: A01P 17/00, A01M 29/12, A01N 25/10, A01N 25/12, A01N 31/02, A01N 41/12

(54) **DIFFUSEUR DE PHÉROMONE TERRITORIALE POUR PROTÉGER DES TROUPEAUX**

(30) Priorité: 14.02.2025 FR 2501559
(71) Demandeur: Melchior Material And Life Science France, 64170 LACQ (FR)
(72) Inventeur: GUERRET, Olivier, 64170 Lacq (FR)
(74) Mandataire: IP Trust

(57) **Abrégé**

La présente invention concerne un procédé de préparation d'un élément de protection préventive de bétail contre des prédateurs par diffusion d'une substance chimique qui affecte le comportement des prédateurs caractérisé en ce qu'il consiste à :
a) Préparer une solution (3) comprenant un solvant organique ou un excipient lipophile (1) contenant entre 10 et 60% volumique d'un composé ou d'un mélange de composés volatils sémio-chimiques (2)
b) Mettre en contact (5) ladite solution (3) avec des granulés de matériau co-polymère, de préférence nanostructuré à base de copolymère (4) comprenant au moins un bloc hydrophile présentent une compatibilité avec des solvants polaires
c) Consécutivement ou simultanément, introduire (5) ladite solution et lesdites granulés dans un tube de centrifugation inerte et résistant aux solvants et aux polymères, et procéder à une homogénéisation (6) pour préparer un tube rempli de granulés imprégnés, associé à un dispositif de fermeture comprenant une zone hermétique et une zone perméable, munie d'un élément permettant de réguler la libération progressive de la substance active et de limiter son évaporation prématurée.

Elle concerne aussi un élément de protection ainsi préparé ainsi qu'un procédé de protection du bétail avec un tel élément.

## Description

### Domaine de l'invention

La présente invention concerne le domaine de la protection des troupeaux contre les prédateurs carnivores, notamment les prédateurs apex.

La cohabitation entre les activités de pastoralismes et la faune sauvage devient de plus en plus problématique. En effet, non seulement, la colonisation des espaces sauvages par des agriculteurs réduit les espaces naturels de chasse des grands prédateurs, mais aussi la protection de ces prédateurs et leur prolifération les rend beaucoup plus agressifs vis-à-vis de la ressource abondante que constituent les troupeaux.

La signature d'accords de protection des grands prédateurs contre la chasse et le braconnage interdit aux gardiens de troupeaux les réactions d'auto-défense spontanées ce qui rend plus vulnérables les troupeaux. On constate une croissance du nombre de bêtes tuées chaque année par des prédateurs causant des dommages tant économiques que psychologiques pour les éleveurs. Ces problématiques sont réelles en Europe avec la prolifération des grands prédateurs (loup, ours, lynx) mais aussi en Afrique ou en Asie avec le développement de l'expansion de l'activité humaine qui multiplie le recouvrement des zones naturelles de chasse des prédateurs et de pastoralisme.

Depuis plusieurs années, des approches fondées sur l'utilisation de molécules sémio-chimiques ont été envisagées pour protéger les troupeaux contre des prédateurs. Les sémio-chimiques sont des substances chimiques utilisées par les organismes vivants pour communiquer avec d'autres êtres vivants. Ils se classent en trois grandes catégories :
- Les phéromones impliquées dans la communication intra-spécifique (entre individus de la même espèce).
- Les allomones et kairomones impliquées dans la communication interspécifique (entre différentes espèces) qui joue souvent un rôle synergique avec les phéromones.
- D'autres marqueurs chimiques impliqués dans la communication non spécifique, ex. odeurs corporelles.

Les sémio-chimiques sont donc des outils de communications entre individus d'une même espèce ou entre des espèces différentes. Des molécules d'une certaine volatilité sont détectées par les systèmes olfactifs des animaux et provoquent des réactions réflexes simplement provoquées par l'excitation des neurones récepteurs (fuite/gel, peur/apaisement, attirance/répulsion en fonction des substances sémio-chimiques).

Dans tous ces cas, les molécules susceptibles d'agir ainsi ont des points communs : ce sont des molécules soufrées comme le méthyl-propyl sulfure (canidés), le 3-mercapto-3-méthylbutan-1_ol (léopard, chat, hyène, lion), le disulfure de diméthyl, le D3-isopentenyl méthyl sulfure (Loup, lion) avec des points d'ébullition assez bas (compris entre 97°C et 183 °C). Ce dernier fait peut expliquer pourquoi les odeurs doivent être renouvelées fréquemment par les animaux pour être efficaces.

### Etat de la technique

On connaît dans l'état de la technique le brevet WO 2024/194147, qui décrit un dispositif de protection non létale de troupeaux contre des prédateurs, notamment les loups, reposant sur la diffusion de substances chimiques volatiles destinées à affecter le comportement des prédateurs. Ce document propose l'incorporation d'un bouquet phéromonal, comprenant notamment des composés soufrés et aromatiques, dans une matrice hydrophobe de type cireuse ou polymérique, laquelle est ensuite montée sur un support tel qu'un collier destiné à être porté par les animaux du troupeau. La libération progressive des substances actives est assurée par diffusion à partir de ladite matrice imprégnée.

Une telle solution présente cependant des inconvénients majeurs. En particulier, la mise en œuvre repose sur un procédé de fabrication à chaud, impliquant la fusion ou le ramollissement de matrices hydrophobes, ce qui est intrinsèquement incompatible avec la manipulation de composés fortement volatils et malodorants. Cette approche conduit inévitablement à des pertes importantes de substances actives dès la phase de fabrication, rendant le procédé difficilement reproductible, coûteux et peu compatible avec une production industrielle à grande échelle. En outre, la cinétique de diffusion obtenue est mal maîtrisée : soit les composés restent piégés dans la matrice, soit ils sont libérés de manière trop rapide, avec disparition précoce des composants réellement répulsifs. Enfin, les matrices cireuses décrites présentent une stabilité limitée en conditions réelles d'usage, notamment sous l'effet de la chaleur, du rayonnement solaire et des contraintes environnementales rencontrées en milieu pastoral.

On connaît également dans l'état de la technique le brevet WO 2007/059231, qui décrit des dispositifs de diffusion de composés volatils, notamment des fragrances ou des substances odorantes, à partir de supports absorbants ou de matrices polymériques disposés dans des contenants munis d'ouvertures ou de zones de ventilation destinées à contrôler la diffusion vers l'environnement. Ce document est principalement orienté vers des applications de parfumerie, de désodorisation ou d'aromatisation d'espaces ou de produits de consommation pendant des durées relatives brèves, de l'ordre de quelques dizaines de minutes ou d'heures, mais en aucun cas capable d'assurer une diffusion pérènne et perceptible pendant plusieurs jours voire plusieurs semaines, et mêmes plusieurs mois.

Une telle solution présente l'inconvénient fondamental d'être exclusivement conçue pour des applications de parfumerie, de désodorisation ou d'aromatisation d'ambiance, c'est-à-dire pour des substances dont la volatilité, la stabilité et la fonction sont sans commune mesure avec celles de sémio-chimiques biologiquement actifs. Ce document ne traite en aucune manière de la problématique du chargement de supports polymériques avec des fractions élevées de composés volatils, ni de la limitation des pertes par évaporation lors des étapes de préparation. Il ne fournit aucun enseignement sur l'obtention d'une imprégnation homogène et reproductible, ni sur la maîtrise d'une cinétique de diffusion prolongée en conditions extérieures sévères. La transposition directe de cet enseignement à un dispositif agricole de protection contre des prédateurs exposerait donc l'homme du métier à un risque élevé d'échec fonctionnel.

On connaît par ailleurs dans l'état de la technique la demande de brevet US 2012/181349, qui décrit des récipients ou dispositifs partiellement perméables destinés à la diffusion contrôlée de substances volatiles, notamment dans des applications de désodorisation ou de diffusion d'agents actifs dans l'air ambiant. Ces dispositifs reposent sur l'utilisation de parois ou de membranes permettant un passage limité des composés volatils.

Une telle solution présente l'inconvénient de se limiter à une architecture de contenant diffuseur, sans apporter d'enseignement exploitable sur la manière de charger efficacement des composés volatils dans un support polymérique, encore moins sur la gestion de substances extrêmement volatiles et sensibles. Ce document ne traite ni de la compatibilité chimique entre solvants, polymères et contenants, ni de la limitation des pertes au cours des opérations de fabrication. Il ne propose aucune solution permettant d'assurer une stabilité de stockage prolongée ni une diffusion reproductible en environnement ouvert, ce qui le rend inadapté à une application de protection de troupeaux contre des prédateurs.

On connaît également dans l'état de la technique le brevet WO 2004/066983, qui décrit des formulations et dispositifs destinés à la libération prolongée de substances actives à partir de matrices polymériques, notamment au moyen de tubes ou de contenants partiellement perméables. Ce document est principalement orienté vers des applications pharmaceutiques ou assimilées, dans lesquelles la diffusion contrôlée d'un principe actif est recherchée.

Une telle solution présente l'inconvénient d'être conçue pour des principes actifs relativement stables, typiquement dans des contextes pharmaceutiques ou assimilés, et non pour des composés très volatils et fortement odorants. Ce document ne traite pas des problèmes spécifiques liés à l'évaporation prématurée lors de la préparation, ni de l'imprégnation de supports granulaires par des solutions riches en composés volatils. En outre, il n'aborde pas la question de la compatibilité des matériaux avec des solvants organiques, ni celle de la maîtrise fine de la cinétique de relargage en conditions d'exposition prolongée en milieu extérieur.On connaît enfin dans l'état de la technique le brevet WO 2021/053683, qui décrit des compositions répulsives imitant des odeurs de fèces ou de marquages de prédateurs, destinées à éloigner certains animaux. Ces compositions reposent sur l'utilisation de mélanges odorants incorporés dans des supports ou des formulations aptes à diffuser les substances actives dans l'environnement.

Une telle solution présente l'inconvénient de se focaliser essentiellement sur la nature chimique des composés répulsifs, sans proposer de solution technique crédible pour leur stabilisation et leur diffusion contrôlée dans le temps. Ce document ne décrit aucun procédé permettant de charger efficacement un support polymérique tout en limitant les pertes par évaporation, ni d'obtenir une imprégnation homogène et reproductible. Il ne traite pas davantage des contraintes industrielles liées à la fabrication, au stockage et à l'utilisation prolongée de tels dispositifs en environnement agricole réel.

### Inconvénients de l'art antérieur

Ainsi, aucun des documents de l'état de la technique cités ne propose une solution apte à concilier simultanément un chargement élevé en composés volatils, une limitation des pertes par évaporation lors de la préparation, une imprégnation homogène et reproductible du support polymérique, et une maîtrise durable de la cinétique de diffusion en conditions d'usage extérieur.

En premier lieu, les phéromones sexuelles territoriales spécifiques sont sujettes à l'habituation. Elles peuvent perdre leur efficacité sur le long terme : En effet, les molécules soufrées étant assez volatiles, leur note tend à diminuer rapidement et des notes trop faibles peuvent être le signe d'un territoire à l'abandon. Un loup ou un autre prédateur peut comprendre que le signal territorial n'est pas ou n'est plus associé à un individu réel et osera investir ce nouveau territoire y laissant sa propre marque - ce qui constitue une forme d'habituation à un marquage de territoire.

De plus, les phéromones sexuelles territoriales spécifiques ne fonctionnent que pour une seule espèce (ex. une phéromone territoriale de loup ne repoussera que d'autres loups, mais pas les ours ou les renards ou même les chiens errants qui sont de redoutables prédateurs).

On observe aussi que les phéromones sexuelles territoriales peuvent paradoxalement attirer des individus en rut. Une phéromone sexuelle de loup pourrait attirer un mâle dominant au lieu de le repousser. Au contraire, l'intensité des odeurs de marquages semblent être aussi liée à la capacité reproductrice du mâle alpha. Plus il sera fécond, et plus son marquage sera fort pour éloigner d'autres loups de son territoire.

Enfin, les phéromones territoriales spécifiques sont souvent complexes et volatiles, ce qui les rend difficiles à stabiliser et à encapsuler pour une diffusion prolongée homogène imitant le marquage fréquent des dominants.

La demande de WO2024/194147A1 propose des formulations contenant un bouquet phéromonal constitué par un mélange de méthyl propyl sulfure, de l'acétophénone et du benzaldehyde fortement dilué dans une matrice hydrophobe cireuse à une température de 80° en présence d'antioxydants et de tensioactifs. Les pâtes ainsi obtenues peuvent être conditionnée par enduction polymérique hydrophobe. Cependant ce type de formulation présente plusieurs inconvénients :
- La réalisation à chaud du procédé est difficile car le méthy-propyl sulfure a un point d'ébullition bas et le fait de manipuler le mélange hydrophobe fondu pour le couler dans son support est très difficile à mettre en œuvre à grande échelle d'un point de vue de l'hygiène et de la santé tant l'odeurs de ce composé est repoussante pour l'homme.
- Ensuite, les résultats de diffusion ne sont pas acceptables pour les applications envisagées : soit les volatiles ne sont pas libérés de la formulation (formulation 2), soit quand ils le sont (formulation 1), le méthyl propyl sulfure disparait très vite, ne laissant rapidement que les deux autres composants du mélange phéromonal. A notre connaissance, selon la littérature, seul le sulfure a un effet répulsif sur les loups et les autres composés (benzaldéhyde et acétophénone) sont des composés que l'on retrouve dans les urines de toute sorte de mammifères sans qu'ils jouent un rôle de sémio-chimique.
- Le caractère cireux de la formulation finale la rend d'une part difficile à conserver lorsqu'elle sera exposée en plein été au soleil dans les alpages et les odeurs du mélange passent à travers les contenants envisagés de l'invention.
- Le choix de matrices cireuses rend nécessaire la protection du produit par des antioxidants et nécessite aussi l'ajout de tensio actifs pour compatibiliser les actifs avec la cire.

Par ailleurs, l'utilisation d'antioxydants tels que la vitamine E, la vitamine C, le β-carotène, le sélénium, le zinc, les polyphénols, la coenzyme Q10, l'acide alpha-lipoïque et les caroténoïdes dans la protection et la libération contrôlée des phéromones présente plusieurs inconvénients, notamment en termes de stabilité chimique, d'effets secondaires, d'interactions et de coûts. Ces composés subissent des phénomènes d'oxydation rapide s'ils sont exposés à l'air ou à des UV et le produit de ces oxydations peut lui-même réagir avec les phéromones. Certains antioxydants, qui sont des réducteurs, peuvent directement réagir chimiquement avec les phéromones, modifiant leur structure et donc leur efficacité. Les antioxydants peuvent modifier la perméabilité des supports de formulation utilisés pour la libération prolongée des phéromones. Certains composés liposolubles (ex. coenzyme Q10, β-carotène, vitamine E) ont une libération très lente, ce qui peut perturber le relargage des phéromones si la diffusion est trop prolongée. Certains antioxydants ne sont pas absorbés efficacement par les matrices polymériques. Certains antioxydants ne restent pas homogènes dans la formulation, ce qui entraîne une libération inégale des phéromones.

De même, certains tensioactifs ionique ou cationiques présentent des risques de toxicité et peuvent altérer la diffusion des phéromones.

Ces matrices hydrophobes qui sont décrites dans la demande de WO2024/194147A1 et leur mode de réalisation ne sont donc pas adaptées à l'utilisation qu'on veut en faire ni à des productions économiquement efficaces à grande échelle.

Plus généralement, les solutions de l'art antérieur pose le problème de la préparation d'un élément de protection préventive du bétail contre des prédateurs, par diffusion de composés sémiochimiques volatils, permettant à la fois:
- d'incorporer une fraction volumique élevée (10-60%) de composés volatils dans un support polymère,
- d'obtenir une imprégnation homogène et reproductible du support,
- de limiter les pertes par évaporation prématurée pendant la fabrication,
- et de maîtriser la cinétique de libération progressive en conditions d'usage, en limitant notamment un relargage initial trop rapide.

Afin d'aboutir à une meilleure robustesse de fabrication, une meilleure stabilité de charge et une meilleure cinétique de diffusion utile sur durée prolongée qu'avec les solutions connues dans l'art antérieur.

### Solution apportée par l'invention

Afin de remédier à ces inconvénients, la présente invention concerne un procédé de préparation d'un élément de protection préventive de bétail contre des prédateurs par diffusion d'une substance chimique qui affecte le comportement des prédateurs, permettant de préparer des supports diffusants restant actifs pendant plusieurs semaines voire plusieurs mois, pour la diffusion de phéromones qui sont des molécules beaucoup plus fragiles que des essences aromatiques utilisées dans le domaine de la parfumerie et de la cosmétique.

Le procédé consiste notamment à :
a) Préparer une solution comprenant un solvant organique ou un excipient lipophile contenant entre 10 et 60% volumique d'un composé ou d'un mélange de composés volatils sémio-chimiques
b) Mettre en contact, à température ambiante, ladite solution avec des granulés de matériau co-polymère, de préférence nanostructuré à base de copolymère comprenant au moins un bloc polaire à motif hydrophile présentant une compatibilité avec des solvants polaires
c) Consécutivement ou simultanément, introduire ladite solution et lesdits granulés dans un tube de centrifugation inerte et résistant aux solvants et aux polymères, et procéder à une homogénéisation pour préparer un tube rempli de granulés imprégnés, associé à un dispositif de fermeture comprenant une zone hermétique et une zone perméable, munie d'un élément permettant de réguler la libération progressive de la substance active et de limiter son évaporation prématurée.

Selon des variantes, le procédé présente en outre une ou plusieurs des caractéristiques suivantes :
- lesdits composés volatils sémio-chimiques sont constitués par une molécule ou par un mélange de molécules sémio-chimiques soufrées.
- lesdits composés volatils sémio-chimiques appartiennent à la famille des mercaptans, des sulfures ou des di-sulfures.
- lesdits composés volatils sémio-chimiques sont constitué par une ou plusieurs des molécules suivantes : méthyl-propyl sulfure, le 3-mercapto-3-méthylbutan-1_ol, le disulfure de diméthyl, le D3-isopentenyl méthyl sulfure.
- lesdits composés volatils sémio-chimiques comprennent au moins un composé synergiste et au moins une phéromone.
- ledit solvant organique ou un excipient lipophile est de l'acétone.
- ledit solvant organique ou un excipient lipophile est de l'huile.
- lesdits blocs hydrophiles des blocs de type PMMA (polyméthacrylate) comprenant des motifs hydrophiles.
- ledit co-polymère comprend un bloc structurant structurant de type PABu (Polyacrylate de butyle).
- ledit matériau copolymère est un copolymère tribloc de type b-polyméthacrylate -b-polyacrylate d'alkyle-b polyméthcrylate dans lesquels les blocs polyméthacrylate sont constitués de méthacrylate de méthyle et d'un co-monomère polaire hydrophile et un bloc polyacrylate constitué de polyacrylate de butyle ou acrylate d'alkyle tel que l'acrylate d'hexyle ou de 2-éthyl-hexyle.
- lesdits microtubes sont des microtubes en polypropylène.
- Le procédé comporte en outre après ladite étape de centrifugation une étape de stérilisation à une température comprise entre 90 et 120° des microtubes.

L'invention concerne aussi un élément de protection préventive de bétail contre des prédateurs par diffusion d'une substance chimique qui affecte le comportement des prédateurs caractérisé en ce qu'il comprend des microtubes inertes et résistants aux solvants et aux polymères contenant des granulés de matériau co-polymère, de préférence nanostructuré à base de copolymère comprenant au moins un bloc polaire-hydrophile présentent une compatibilité avec des solvants polaires imprégnés d'une solution comprenant un solvant organique ou un excipient lipophile contenant entre 10 et 60% volumique d'un composé ou d'un mélange de composés volatils sémio-chimiques.

Optionnellement, lesdits microtubes sont bouchés par un bouchon à vis muni d'une partie pleine et d'une partie aérée obturée avant utilisation par un joint silicone.

L'invention porte encore sur un procédé de protection préventive de bétail contre des prédateurs caractérisé en ce que l'on équipe une partie majoritaire des bêtes du bétail de colliers porteurs des microtubes susvisés au moins partiellement débouchés.

### Description détaillée d'un exemple non limitatif de réalisation

La présente invention sera mieux comprise à la lecture de la description qui suit, concernant un exemple non limitatif de réalisation illustré par les dessins annexés où :

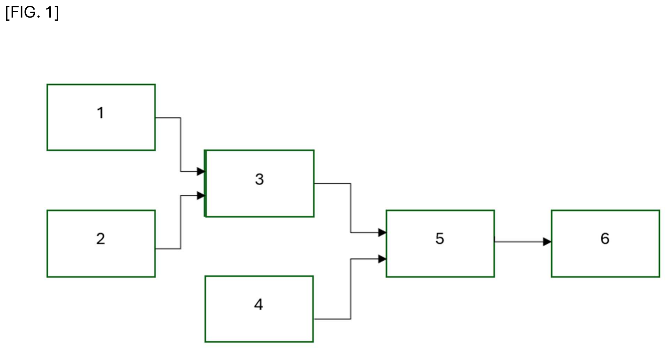

[FIG. 1] la figure 1 représente une vue schématique des étapes de préparation du procédé selon l'invention.

### Définitions

On entend par « Prédateurs territoriaux » au sens du présent brevet, des mammifères carnassiers marquant leur territoire de chasse au moyen de phéromones territoriales. Ces animaux peuvent être solitaires (léopard, tigre, ours, renard) ou vivre en meute (loups, lionnes, hyènes).

On entend par « Sémio-chimiques » au sens du présent brevet, des substances chimiques utilisées par les organismes vivants pour communiquer avec d'autres êtres vivants. Les sémio-chimiques incluent les phéromones impliquées dans la communication intra-spécifique (entre individus de la même espèce), les allomones et kairomones impliquées dans la communication interspécifique (entre différentes espèces) et les marqueurs chimiques impliquées dans la communication non spécifique, par exemple les odeurs corporelles.

On entend par « Phéromones » au sens du présent brevet, une substance chimique émise par un individu d'une espèce et détectée par un autre individu de la même espèce, provoquant une réponse comportementale ou physiologique spécifique (ex. attraction sexuelle, signal d'alarme, marquage territorial).

On entend par « Phéromones territoriales » au sens du présent brevet, des substances odoriférantes laissées par un prédateur pour signaler aux autres individus de la même espèce que la zone dans laquelle ils se trouvent est son territoire de chasse. Ces substances peuvent être présentes dans les urines, les fèces ou dans les frottis que les animaux laissent parterre ou sur les arbres.

On entend par « Synergiste » au sens du présent brevet, des composés chimiques présent dans le marquage territorial qui permet une meilleure action de la phéromone. Le composé peut ainsi agir comme un fixateur qui retiendra la phéromone pour que la trace ait une certaine rémanence ou comme un traceur qui permettrait de savoir depuis combien de temps environ la trace a été laissée.

### Principe général de l'invention

Le principe général de l'invention consiste à faire absorber une solution contenant une ou plusieurs sémio-chimiques dans un copolymère de préférence nanostructuré comportant des blocs polaires à motifs hydrophiles et d'inclure les granulés résultant de cette préparation dans des tubes inertes pour préparer des éléments de diffusion stables dans le temps. Le contact entre phéromone et les granulés se fait de préférence directement dans le tube fermé par un bouchon pour éviter toute fuite de la phéromone entre le moment ou les billes sont mises en contact avec elle et le moment ou on ouvrira le flacon.

### Protocole de préparation des tubes de diffusion

La figure [FIG. 1] illustre de façon schématique les étapes de préparation de tubes de diffusion selon l'invention.

Il comporte une étape (1) de préparation de la solution de sémio-chimiques et un excipient (2) (par exemple de l'huile de tournesol, ou un solvant organique (ex. acétone) ou un excipient lipophile) suivi par une étape (3) de mélange avec une concentration de 10 à 60 % de composés sémio-chimiques soufrés (mercaptans, sulfures, disulfures). Le mélange est avantageusement homogénéisé pendant une durée d'une heure.

On procède par ailleurs à la préparation des granulés polymères (4), par sélection et pesée de 40 g de granulés polymères (copolymères triblocs) ayant une compatibilité avec des solvants polaires. L'étape suivante (5) et l'imprégnation des granulés par mise en contact de 10 g de solution de sémio-chimiques résultant de l'étape de mélange (3) avec 40 g de granulés polymères résultant de l'étape (4), avec une homogénéisation. Cette étape (5) se fait de préférence après remplissage des microtubes en polypropylène avec le mélange granulés-phéromones. On procède au bouchage avec un bouchon à vis comprenant une partie pleine et une partie aérée avec un joint en silicone pour éviter toute évaporation prématurée et à une homogénéisation des microtubes suivi d'un mélange dans un tambour rotatif pour assurer une répartition homogène des phéromones dans les granulés polymères pendant 1 heure par exemple. On procède ensuite à une étape (6) de stérilisation thermique (optionnel mais recommandé) par chauffage des microtubes à 100°C pendant 5 minutes pour gélifier les polymères autour des phéromones et améliorer la stabilité du dispositif. Les tubes ainsi préparés sont stockés et conditionnés après vérification de l'étanchéité des microtubes, emballage, et mise en stock. Les tubes sont stables pendant au moins 4 ans en l'absence de fuites.

### Premier exemple de réalisation

Un premier exemple de réalisation est décrit ci-après. Il n'est bien entendu pas limitatif.

Dans une première étape, une solution d'huile de tournesol ou d'acétone contenant à une concentration de 10 à 60% volumique d'une molécule ou d'un mélange de molécules soufrées appartenant à la famille des mercaptans, des sulfures ou des di-sulfures. Dans ce mélange, l'huile ou l'acétone sont des synergistes que l'on retrouve fréquemment dans les compositions de phéromone de félin ou de canidés. Les composés soufrés sont les composants du bouquet phéromonal actif comme marqueur de territoire de chasse.

Dans une seconde étape, on met en contact 10 g de la solution précédente avec 40g de granulés de matériau polymère, de préférence de matériau polymère nanostructuré à base de copolymère tribloc de type b-polyméthacrylate -b-polyacrylate d'alkyle-b polyméthcrylate dans lesquels les blocs polyméthacrylate sont constitués à au moins 90% de méthacrylate de méthyle et peuvent contenir entre 0.5 et 10% d'un co-monomère hydrophyle tel que l'acide méthacrylique, la diméthyl methacrylamide ou le méthacrylate de glycidyle et le bloc polyacrylate est constitué de polyacrylate de butyle à 50% au moins et autre acrylate d'alkyle tel que l'acrylate d'hexyle ou de 2-éthyl-hexyle.

Dans une troisième étape éventuellement concomitante avec la précédente, on remplit des microtubes pour centrifuge en polypropylène avec les granulés obtenus.

Le tube est bouché par un bouchon à vis muni d'une partie pleine et d'une partie aérée et d'un joint silicone pour empêcher une perte précoce de la phéromone. Eventuellement, les tubes sont placés pendant 1 heure dans un mélangeur à tambour pour permettre une bonne homogénéisation des mélanges granulés et des mélanges phéromonaux.

De manière préférentielle, le tube est stérilisé pendant 5 mn à 100°C ce qui permet aussi de gélifier le polymère autour de la phéromone.

Les tubes ainsi obtenus et après ouverture totale ou partielle des bouchons qui sont de préférence à vis sont utilisables pour la protection des troupeaux en les fixant dans un support aéré attaché à un collier dont on a muni les bêtes du troupeau.

Les troupeaux ainsi équipés maintiennent les prédateurs de type gros félin ou loup à distance. De préférence, il faut équiper entre 50 et 100% des bêtes pour être efficace et de manière encore préférentielle entre 80 et 100% des bêtes.

Dans le cas des troupeaux très dispersés, leur dissémination par petits lots induit le besoin d'équiper toutes les bêtes pour garantir une protection à tous les individus.

Un avantage de cette solution innovante consiste dans la simplicité de fabrication, en particulier due au fait que tant que les microtubes ne sont pas fermés de manière étanche, les formulations ne sont pas chauffées. Cela permet de ne pas répandre dans l'environnement d'odeurs des composés soufrés qui sont très incommodantes pour les opérateurs et le voisinage.

Un autre avantage de cette solution est la préservation des microtubes qui sont stables sans relarguer d'odeurs pendant au moins 4 ans et ce sans ajout de préservateurs (antioxydant, anti UV...).

### Deuxième exemple de réalisation

Les molécules suivantes (entre parenthèse, leurs points d'ébullition) : méthyl-propyl sulfure (97°C), le 3-mercapto-3-méthylbutan-1_ol (186°C), le disulfure de diméthyl (110°C), le D3-isopentenyl méthyl sulfure(143°C) ont été achetées chez TCI ou chez Merck.

L'acétone est de l'acétone industriel 98%.

L'huile de tournesol est de l'huile commerciale de type Lesieur.

Les copolymères à blocs sont fournis par Arkema sous la marque Nanostrength. Les grades utilisés sont les grades, 53, M22, M52N et M22N. Les grades désignés par un N contiennent un monomère polaire hydrosoluble de type diméthyméthacrylamide dans les blocs polyméthacrylate.

### Fabrication des tubes de phéromones et de synergistes

Dans un réacteur agité de 100 ml à température ambiante et sous atmosphère d'azote, on verse tout d'abord 50 ml de synergiste (huile de tournesol ou acétone) puis on ajoute des compositions de phéromone à raison de 50 ml pour obtenir les mélanges phéromonaux P1-P8 . Natures des compositions P1-8 en % poids

**[Table 1]**

| Formule | Synergiste (50ml) | Composition de phéromone (en% poids) 50 ml | | | |
|---|---|---|---|---|---|
| | | méthyl-propyl sulfure | 3-mercapto-3-méthylbutan-1_ol | disulfure de diméthyl | D3-isopentenyl méthyl sulfure |
| P1 | Huile de tournesol | 100 | | | |
| P2 | Huile de tournesol | | 100 | | |
| P3 | Huile de tournesol | 80 | | 10 | 10 |
| P4 | Huile de tournesol | 40 | 40 | 10 | 10 |
| P5 | Acétone | 100 | | | |
| P6 | Acétone | | 100 | | |
| P7 | Acétone | 80 | | 10 | 10 |
| P8 | Acétone | 40 | 40 | 10 | 10 |

Des microtubes pour centrifuge en polypropylène de 1.8 ml, T1 à T32 sont ensuite remplis à raison de 250µl d'une des formulation P1-8 et de 1,4g de granulés de nanostrength selon les règles suivantes :

**[Table 2]**

| N° tubes | Mélanges phéromonal (0.25 mg) | Grade de nanostrength (1.4g) |
|---|---|---|
| T1 | P1 | M53 |
| T2 | P1 | M22 |
| T3 | P1 | M52N |
| T4 | P1 | M22N |
| T5 | P2 | M53 |
| T6 | P2 | M22 |
| T7 | P2 | M52N |
| T8 | P2 | M22N |
| T9 | P3 | M53 |
| T10 | P3 | M22 |
| T11 | P3 | M52N |
| T12 | P3 | M22N |
| T13 | P4 | M53 |
| T14 | P4 | M22 |
| T15 | P4 | M52N |
| T16 | P4 | M22N |
| T17 | P5 | M53 |
| T18 | P5 | M22 |
| T19 | P5 | M52N |
| T20 | P5 | M22N |
| T21 | P6 | M53 |
| T22 | P6 | M22 |
| T23 | P6 | M52N |
| T24 | P6 | M22N |
| T25 | P7 | M53 |
| T26 | P7 | M22 |
| T27 | P7 | M52N |
| T28 | P7 | M22N |
| T29 | P8 | M53 |
| T30 | P8 | M22 |
| T31 | P8 | M52N |
| T32 | P8 | M22N |

Un bouchon à vis étanche est fermement vissé sur chaque tube.

Chaque série de tube est divisée en deux : une moitié est utilisée en l'état, l'autre moitié est stérilisée à la vapeur pendant 5 mn à une température de 95°C. Cela à pour effet de fondre les granulés de polymère et d'obtenir un gel dans les tubes numérotés de T1s à T32s.

### Estimation de la diffusion des diffuseurs selon l'invention.

Les études de diffusion sont pratiquées à température contrôlée, 30°C, selon plusieurs mode de manipulation des microtubes. Le premier mode consiste à ôter complètement le bouchon, le second mode consiste à dévisser partiellement le bouchon, le quatrième mode consiste à garder le bouchon complètement fermé.

Pour calculer la perte d'actif, on effectue des pesées des diffuseurs - on retient comme donnée comparative le temps de demi-vie des diffuseurs (noté T1/2, en jours), temps qu'il faut pour que la moitié de l'actif soit évaporé. Dans le cas des formulations T17(s)-T32(s), nous considérons le temps de demi-vie comme le temps qu'il faut pour perdre le poids d'acétone plus la moitié du poids de la phéromone. Les mesures sont arrêtées après 100 jours. Par comparaison un microtube ouver ne contenant que du methyl propyl sufure à hauteur de 125 µg a un temps de demi-vie dans les mêmes conditions de seulement 3 jours.

Résultats en jours :

**[Table 3]**

| Tube | T1/2 (ouvert/semi-ouvert/fermé) | Tube | T1/2 (ouvert/semi-ouvert/fermé) |
|---|---|---|---|
| T1 | 12/40/100 | T1s | 25/59/100 |
| T2 | 12/42/100 | T2s | 26/58/99 |
| T3 | 15/45/100 | T3s | 28/61/100 |
| T4 | 14/41/100 | T4s | 24/55/100 |
| T5 | 21/70/100 | T5s | 35/88/100 |
| T6 | 21/69/100 | T6s | 34/89/100 |
| T7 | 22/70/100 | T7s | 35/95/100 |
| T8 | 21/65/100 | T8s | 34/86/100 |
| T9 | 18/55/100 | T9s | 33/71/100 |
| T10 | 18/54/100 | T10s | 33/70/100 |
| T11 | 18/53/100 | T11s | 32/69/100 |
| T12 | 17/53/100 | T12s | 30/69/100 |
| T13 | 20/64/100 | T13s | 32/72/100 |
| T14 | 21/65/100 | T14s | 31/70/100 |
| T15 | 20/61/100 | T15s | 33/71/100 |
| T16 | 21/62/100 | T16s | 32/70/100 |
| T17 | 13/44/100 | T17s | 28/63/100 |
| T18 | 14/43/100 | T18s | 27/62/99 |
| T19 | 15/45/100 | T19s | 30/67/100 |
| T20 | 15/42/100 | T20s | 26/61/100 |
| T21 | 23/77/100 | T21s | 36/90/100 |
| T22 | 24/75/100 | T22s | 35/89/100 |
| T23 | 24/73/100 | T23s | 36/92/100 |
| T24 | 23/72/100 | T24s | 36/91/100 |
| T25 | 20/59/100 | T25s | 35/76/100 |
| T26 | 21/58/100 | T26s | 35/74/100 |
| T27 | 22/59/100 | T27s | 34/75/100 |
| T28 | 19/60/100 | T28s | 33/73/100 |
| T29 | 24/69/100 | T29s | 35/78/100 |
| T30 | 22/69/100 | T30s | 36/77/100 |
| T31 | 25/66/100 | T31s | 37/76/100 |
| T32 | 23/68/100 | T32s | 37/76/100 |

On constate donc que les formulations sont efficaces pour relarguer progressivement lles mélanges P1 à P8. Le fait de stériliser pendant 5 minutes à 100°C donne un avantage de ce point de vue. Cela peut s'expliquer par une pénétration du mélange phéromonal au cœur du matériau polymère.

On remarque aussi que les modalité avec le bouchon vissé ne relargue pas de phéromone ce qui indique l'excellente stabilité au stockage de ces microtubes.

## Revendications

1. Procédé de préparation d'un élément de protection préventive de bétail contre des prédateurs par diffusion d'une substance chimique qui affecte le comportement des prédateurs **caractérisé en ce qu'**il consiste à :
a) Préparer une solution (3) comprenant un solvant organique ou un excipient lipophile (1) contenant entre 10 et 60% volumique d'un composé ou d'un mélange de composés volatils sémio-chimiques (2)
b) Mettre en contact (5) à température ambiante, ladite solution (3) avec des granulés de matériau co-polymère, de préférence nanostructuré à base de copolymère (4) comprenant au moins un bloc polaire à motif hydrophile présentent une compatibilité avec des solvants polaires
c) Consécutivement ou simultanément, introduire (5) ladite solution et lesdites granulés dans un tube de centrifugation inerte et résistant aux solvants et aux polymères, et procéder à une homogénéisation (6) pour préparer un tube rempli de granulés imprégnés, associé à un dispositif de fermeture comprenant une zone hermétique et une zone perméable, munie d'un élément permettant de réguler la libération progressive de la substance active et de limiter son évaporation prématurée.

2. Procédé de préparation d'un élément de protection préventive de bétail contre des prédateurs selon la revendication 1 **caractérisé en ce que** lesdits composés volatils sémio-chimiques sont constitués par une molécule ou par un mélange de molécules sémio-chimiques soufrées.

3. Procédé de préparation d'un élément de protection préventive de bétail contre des prédateurs selon la revendication précédente **caractérisé en ce que** lesdits composés volatils sémio-chimiques appartiennent à la famille des mercaptans, des sulfures ou des di-sulfures.

4. Procédé de préparation d'un élément de protection préventive de bétail contre des prédateurs selon la revendication précédente **caractérisé en ce que** lesdits composés volatils sémio-chimiques sont constitué par une ou plusieurs des molécules suivantes : méthyl-propyl sulfure, le 3-mercapto-3-méthylbutan-1_ol, le disulfure de diméthyl, le D3-isopentenyl méthyl sulfure.

5. Procédé de préparation d'un élément de protection préventive de bétail contre des prédateurs selon l'une au moins des revendications précédentes **caractérisé en ce que** lesdits composés volatils sémio-chimiques comprennent au moins un composé synergiste et au moins une phéromone.

6. Procédé de préparation d'un élément de protection préventive de bétail contre des prédateurs selon l'une au moins des revendications précédentes **caractérisé en ce que** ledit solvant organique ou un excipient lipophile est de l'acétone.

7. Procédé de préparation d'un élément de protection préventive de bétail contre des prédateurs selon l'une au moins des revendications 1 à 4 **caractérisé en ce que** ledit solvant organique ou un excipient lipophile est de l'huile.

8. Procédé de préparation d'un élément de protection préventive de bétail contre des prédateurs selon l'une au moins des revendications précédentes **caractérisé en ce que** lesdits blocs hydrophiles des blocs de type PMMA (polyméthacrylate) comprenant des motifs hydrophiles.

9. Procédé de préparation d'un élément de protection préventive de bétail contre des prédateurs selon l'une au moins des revendications précédentes **caractérisé en ce que** ledit co-polymère comprend des blocs structurant de type PABu (Polyacrylate de butyle).

10. Procédé de préparation d'un élément de protection préventive de bétail contre des prédateurs selon l'une au moins des revendications 1 à 4 **caractérisé en ce que** ledit matériau copolymère est un copolymère tribloc de type b-polyméthacrylate -b-polyacrylate d'alkyle-b polyméthcrylate dans lesquels les blocs polyméthacrylate sont constitués de méthacrylate de méthyle et d'un co-monomère polaire hydrophile et un bloc polyacrylate constitué de polyacrylate de butyle ou acrylate d'alkyle tel que l'acrylate d'hexyle ou de 2-éthyl-hexyle.

11. Procédé de préparation d'un élément de protection préventive de bétail contre des prédateurs selon l'une au moins des revendications précédentes **caractérisé en ce que** lesdits microtubes sont des microtubes en polypropylène.

12. Procédé de préparation d'un élément de protection préventive de bétail contre des prédateurs selon l'une au moins des revendications précédentes **caractérisé en ce qu'**il comporte en outre après ladite étape de centrifugation une étape de stérilisation à une température comprise entre 90 et 120° des microtubes.

13. Elément de protection préventive de bétail contre des prédateurs par diffusion d'une substance chimique qui affecte le comportement des prédateurs **caractérisé en ce qu'**il comprend des microtubes inertes et résistants aux solvants et aux polymères contenant des granulés de matériau co-polymère, de préférence nanostructuré à base de copolymère comprenant au moins un bloc hydrophile présentent une compatibilité avec des solvants polaires imprégnés d' une solution comprenant un solvant organique ou un excipient lipophile contenant entre 10 et 60% volumique d'un composé ou d'un mélange de composés volatils sémio-chimiques.

14. Elément de protection préventive de bétail contre des prédateurs par diffusion d'une substance chimique qui affecte le comportement des prédateurs, selon la revendication 13, **caractérisé en ce que** lesdits microtubes sont bouchés par un bouchon à vis muni d'une partie pleine et d'une partie aérée obturée avant utilisation par un joint silicone.

15. Procédé de protection préventive de bétail contre des prédateurs **caractérisé en ce que** l'on équipe une partie majoritaire des bêtes du bétail de colliers porteurs des microtubes conformes aux revendications 13 ou 14 au moins partiellement débouchés.
